# EUROPÄISCHE PATENTANMELDUNG

(11) **EP 4 803 278 A2**
(43) Veröffentlichungstag der Anmeldung: **09.09.2026**
(21) Anmeldenummer: 26000011.2
(22) Anmeldetag: 04.03.2026
(51) Int. Cl.: B27N 1/02, B27N 3/02, B07C 5/34

(54) **VERFAHREN ZUR HERSTELLUNG EINER WERKSTOFFPLATTE, WERKSTOFFPLATTE UND ANLAGE ZUR HERSTELLUNG EINER WERKSTOFFPLATTE**

(30) Priorität: 07.03.2025 DE 102025000823
(71) Anmelder: Siempelkamp Maschinen- und Anlagenbau GmbH, 47803 Krefeld (DE)
(72) Erfinder: Schränkler, Moritz, 47799 Krefeld (DE)

(57) **Zusammenfassung**

Die Erfindung betrifft ein Verfahren zur Herstellung einer, wenigstens eine Schicht (2, 3, 4, 5, 6) aufweisenden, Werkstoffplatte (1), wobei wenigstens eine der wenigstens einen Schicht (2, 3, 4, 5, 6) ein, ursprünglich aus einer Ein - oder Mehrjahrespflanze gewonnenes, Basismaterial (B) aufweist, wobei das Basismaterial (B) in Form wenigstens einer ersten Komponente (K1) und einer zweiten Komponente (K2) vorliegt und wenigstens eine der Komponenten (K1, K2, ... Kn) wenigstens anteilig einer, wenigstens in Teilen vorgeformten Werkstoffplatte (W) entnommen ist, wobei das Verfahren einen, Teilströme (T, T-I-1,...,T-III-n) umfassenden, Materialfluss (M) entlang wenigstens eines ersten Abschnitts (I), eines zweiten Abschnitts (II) und eines dritten Abschnittes (III) aufweist, wobei die erste Komponente (K1) und die zweite Komponente (K2) innerhalb des ersten Abschnitts (I) und des dritten Abschnitts (III) gemeinschaftlich in einem Teilstrom bewegt werden.

Es soll ein verbessertes Verfahren zur Herstellung einer solchen Werkstoffplatte bereitgestellt werden. Dazu wird vorgeschlagen, dass die erste Komponente (K1) und die zweite Komponente (K2, K2') innerhalb des zweiten Abschnitts (II) in voneinander separaten Teilströmen (T-II-1, T-II-2) bewegt werden.

## Beschreibung

Die Erfindung betrifft ein Verfahren zur Herstellung einer, wenigstens eine Schicht aufweisenden, Werkstoffplatte, wobei wenigstens eine der wenigstens einen Schicht ein, ursprünglich aus einer Ein - oder Mehrjahrespflanze gewonnenes, Basismaterial aufweist, wobei das Basismaterial in Form wenigstens einer ersten Komponente und einer zweiten Komponente vorliegt und wenigstens eine der Komponenten wenigstens anteilig einer wenigstens in Teile vorgeformten Werkstoffplatte entnommen ist, wobei das Verfahren einen, Teilströme umfassenden, Materialfluss entlang wenigstens eines ersten Abschnitts eines zweiten Abschnitts und eines dritten Abschnittes aufweist, wobei die erste Komponente und die zweite Komponente innerhalb des ersten Abschnitts und des dritten Abschnitts gemeinschaftlich in einem Teilstrom bewegt werden.

Die Erfindung betrifft weiter eine, wenigstens eine Schicht aufweisende Werkstoffplatte, wobei wenigstens eine der wenigstens einen Schicht ein, ursprünglich aus einer Ein - oder Mehrjahrespflanze gewonnenes, Basismaterial aufweist, wobei das Basismaterial in Form wenigstens einer ersten Komponente und einer zweiten Komponente vorliegt und wenigstens eine der Komponenten wenigstens anteilig einer wenigstens in Teile vorgeformten Werkstoffplatte entnommen ist, wobei die erste Komponente und die zweite Komponente optische und/oder chemische Spuren einer gemeinschaftlichen Behandlung aufweisen.

Ferner betrifft die Erfindung eine Anlage zur Herstellung einer wenigstens eine Schicht aufweisenden Werkstoffplatte, wobei wenigstens eine der wenigstens einen Schicht ein, ursprünglich aus einer Ein - oder Mehrjahrespflanze gewonnenes, Basismaterial mit wenigstens einer ersten Komponente und einer zweiten Komponente aufweist und wenigstens eine der Komponenten wenigstens anteilig einer wenigstens in Teile vorgeformten Werkstoffplatte entnommen ist, wobei die Anlage zur Ausführung entsprechender Verfahrensschritte wenigstens einen ersten Abschnitt, einen zweiten Abschnitt und einen dritten Abschnitt aufweist, wobei der Materialflusses entlang der Abschnitte ausgebildet ist.

Die Erfindung kann gemäß der eingangs beschriebenen Festlegung beispielsweise ein Verfahren zum Recyceln von Fasern aus einer faserhaltigen Werkstoffplatte zum Beispiel einer Werkstoffplatte des Typs HDF, MDF oder LDF, wobei die Fasern der Werkstoffplatte mit einem Bindemittel verbunden sind betreffen.

Die Herstellung von Werkstoffplatten findet entweder taktgebunden oder kontinuierlich statt. Bei einer taktgebundenen Herstellung werden die Werkstoffplatten als flächenförmige Gegenstände mit in allen drei Raumrichtungen endlichen Abmaßen erzeugt, während die Werkstoffplatten die in einem kontinuierlichen Prozess erzeugt werden, Ablängungen einer lediglich in zwei Raumrichtungen endliche Abmaße aufweisenden Bahnware darstellen. Dabei gibt die Arbeitsweise der Füge- und/oder Verdichtungseinheit, also der für die Pressung vorgesehene Produktionsabschnitt und die dazu ausgebildete Behandlungsstation vor, ob der Gesamtprozess als taktgebundenes oder kontinuierliches Verfahren beschrieben wird. Da in den Verdichtungseinheiten, respektive den kombinierten Füge- und Verdichtungseinheiten im Allgemeinen bei der Werkstoffplattenerzeugung auch mit nennenswerten Drücken gearbeitet wird, werden diese Einheiten vom Fachmann meist mit Bezug auf eine Gesamtanlage als Pressenteil bezeichnet. Bei der Erzeugung von Werkstoffplatten i.S.d. vorliegenden Schrift liegen die Arbeitsdrücke hier, abhängig von Material und Größe der zu erzeugenden Werkstoffplatte, meist in Bereichen zwischen etwa 50 N/cm² und ca. 500 N/cm² und dort vorteilhafterweise zwischen 100 N/cm² und 400 N/cm², im Falle der Herstellung von zu Dämmzwecken vorgesehenen Werkstoffplatten, die umgangssprachlich auch als Dämmplatten bezeichnet werden, meist jedoch in Bereichen zwischen etwa 0,2 N/mm² und 45 N/mm², meist eher nur bis ca. 30 N/mm² oder sogar nur bis 25 N/mm². Im Allgemeinen wird dabei, je nach gewünschtem Werkstoffplattentyp und -aufbau, gewünschter Stärke und Qualität ein individuell anpassbares Druckverlaufsprofil durchfahren. Unabhängig von diesen, im Pressenteil auftretenden Arbeitsdrücken, beziehungsweise dem in den genannten Bereichen gestalteten und dort zu durchfahrenden Druckverlaufsprofilen bewegt sich der Materialfluss sowohl in den so genannten "taktgebundenen" wie eben auch in den als "kontinuierlich" bezeichneten Verfahren tatsächlich über weite Teile des Gesamtprozesses, also innerhalb mehrere Produktionsabschnitte und den zu deren Durchführung ausgebildeten Behandlungsstationen einer Vorrichtung zur Herstellung von Werkstoffplatten, koninuierlich.

Unter dem Materialfluss ist dabei der Fluss, also die Bewegung, des Materials entlang von aufeinanderfolgenden Produktionsabschnitten und den dazu ausgebildeten

Behandlungsstationen einer Anlage zur Herstellung von Werkstoffplatten zu verstehen, dass schließlich für die Bildung der Werkstoffplatte maßgeblich ist, unabhängig von dessen letztendlichen anteiligen Verbleib im Endprodukt. Gesamtheitlich betrachtet setzt sich der Materialfluss dabei innerhalb einer Vorrichtung zur Herstellung von Werkstoffplatten, also einer Werkstoffplattenerzeugungsanlage, insbesondere aus dem, aus einer Ein- oder Mehrjahrespflanze gewonnenen, Basismaterial(en), der darin enthaltenen Feuchtigkeit, im Allgemeinen wenigstens phasenweise auch zugegebenen Fluiden, insbesondere Wasser, zugegebenen Bindemitteln und fallweise wenigstens phasenweise enthaltenen Lösemitteln zusammen, auch wenn nicht alle der genannten Komponenten bereits in allen Produktionsabschnitten vorhanden sein müssen und/oder sich deren anteilige Zusammensetzung über den Produktionsverlauf ändern können.

Üblicherweise sehen Verfahren zur Herstellung von einer wenigstens eine Schicht aufweisenden Werkstoffplatte, wobei wenigstens eine der wenigstens einen Schicht ein, aus einer Ein- oder Mehrjahrespflanze gewonnenes, Basismaterial aufweist, vor, dass der Materialfluss innerhalb der Werkstoffplattenerzeugungsanlage bei der so genannten "Materialaufbereitung" beginnt. Dort liegt meist lediglich das oder die Basismaterialien vor. Meist befinden sich das oder die Basismaterialien dann, wenigstens bei Eintritt in diesen ersten Produktionsabschnitt, in einem "halbzeugartigen" Zustand, dass bedeutet, die Partikel haben oft noch nicht ihre endgültige Form angenommen.

Durch die Behandlung des Basismaterial innerhalb der aufeinanderfolgenden Behandlungsstationen der Anlage wächst der Reifegrad des Materialflusses und aus den ursprünglich als Rohmaterialien (Halbzeuge) vorliegenden Komponenten entstehen am Ende die Werkstoffplatten. Um die sich dabei verändernden Zusammensetzungen und Eigenschaften des Materialflusses beurteilen zu können, wird der Materialfluss gedanklich in aufeinanderfolgende Materialflussabschnitte aufgeteilt. Diese Materialflussabschnitte müssen also nicht wirklich voneinander separiert sein, sondern sind im Allgemeinen wenigstens phasenweise innerhalb ihrer Bewegung durch die Vorrichtung zur Herstellung einer Werkstoffplatte (der Werkstoffplattenerzeugungsanlage) miteinander verbunden. Die Materialflussabschnitte können dabei sehr kurz ausgebildet sein, beispielsweise nur einen oder wenige Zentimeter. Bezogen auf die Ausdehnung einer üblichen Werkstoffplattenerzeugungsanlage, deren Pressenteil im Falle einer vorgesehenen kontinuierlichen Presse bereits mehrere Zehnmeter, beispielsweise 60 Meter, betragen kann, ist es meist jedoch sinnvoller, den Materialfluss in anderen "Losgrößen" aufzuteilen. Dazu kann sich ein Meter anbieten. In anderen Fällen kann es jedoch auch sinnvoll sein, die Länge der aufeinanderfolgenden und wenigstens phasenweise miteinander verbundenen, den Materialfluss bildenden Materialflussabschnitte von Anfang an gedanklich auf die Endlängenmaße der zu erzeugenden Werkstoffplatten aufzuteilen. Wenigstens in Europa sind dies meist Längen von 3 Metern oder noch häufiger 6 Metern. Die meisten Werkstoffplattenerzeugungsanlagen weisen an wenigstens einem Bereich Entnahmestellen auf, an denen so genannte Laborentnahmen dem Produktionsfluss zu Untersuchungszwecken entzogen werden können. Diese Entnahmestellen sind meist entweder zur Entnahme eines Meters oder einer 6

Plattenlänge ausgelegt, manchmal auch zur Entnahme eines halben Meters oder einer halben Plattenlänge. Letzten Endes können aber Probeentnahmen in allen genannten Längenmaßen mehr oder minder geeignet für die Beurteilung des Vorliegens erfindungsrelevanter Merkmale genutzt werden. Dabei können Probeentnahmen insbesondere an den Ein- und Ausgangsbereichen der jeweils beschriebenen Produktionsabschnitte vorgenommen werden.

Sowohl in wirtschaftlicher Hinsicht, wie im Hinblick auf ihre technische Einsatzfähigkeit nehmen wenigstens eine Schicht aufweisenden Werkstoffplatte, wobei wenigstens eine der wenigstens einen Schicht ein, aus einer Ein- oder Mehrjahrespflanze gewonnenes, Basismaterial aufweist, unter den Werkstoffplatten einen besonderen Stellenwert ein. Derartige Werkstoffplatten werden vom Fachmann häufig auch einfach "Holzwerkstoffplatten" genannt, selbst wenn sie eine oder weitere Schichten aufweisen, die nicht auf einem, aus einer Mehrjahrespflanze gewonnenem Rohmaterial basieren. Holzwerkstoffplatten werden in den unterschiedlichsten Ausführungsformen für unterschiedliche Anwendungszwecke hergestellt. Besonders weit verbreitet sind Spanplatten, OSB-Platten und MDF- oder HDF-Platten, sowie aus einzelnen Schichten derartiger Verbunde aufgebaute Hybridplatten. Die Benennung der Werkstoffplatten hängt dabei von Form und Größe der zum Platten- respektive zum Schichtaufbau verwendeten Holzpartikel ab. Von einer Spanplatte spricht der Fachmann, wenn diese aus "feinen" Holzpartikeln erzeugt wird, von einer OSB-Platte dagegen, wenn diese aus groben Holzpartikeln erzeugt ist. Unter feinen Holzpartikeln versteht der Fachmann im Allgemeinen Partikel, deren maximale Ausdehung in einer Raumrichtung nicht 60 mm überschreitet, meist werden diese als Späne beschriebenen Partikel sogar mit einer maximalen Ausdehnung von höchsten 25 mm oder gar 20 mm ausgebildet, weisen jedoch andererseits auch meist Mindestlängen von 1 mm, 2mm, 3mm oder sogar mehr auf. Unter groben Holzpartikeln versteht der Fachmann im Allgemeinen Partikel, deren maximale Ausdehnung in einer Raumrichtung mindestens 60 mm beträgt, meist werden diese als Langspäne beschriebenen Partikel sogar mit einer maximalen Ausdehnung von höchsten 60 mm bis 185 mm, insbesondere von 80 mm bis 140 mm ausgebildet. Für spezielle Anforderungen können die Partikel sogar in Form von Langspänen mit Nennmaßen bis zu etwa 300 mm ausgebildet werden, z.B. im Bereich von 80 mm bis 240 mm oder von 150 mm bis 300 mm.

MDF- und HDF-Platten, beziehungsweise deren einzelne Schichten, sind dagegen aus (mitteldicht- oder hochdicht verpressten) Partikeln gebildet, die in Faserform ausgebildet und die meist unter Zwischenschaltung eines chemischen Prozesses, meist einer Art Kochprozess (der so genannten "Kochung"), aus dem Rohmaterial gewonnen werden.

Hybridplatten bestehen aus mehreren Schichten unterschiedlicher Arten und sind häufig dann besonders gut geeignet, wenn die Werkstoffplatte für ihren Einsatzzweck verschiedenen Anforderungen gerecht werden muss.

Die genannten Holzwerkstoffplatten werden also aus Holzpartikeln (Spänen, Langspänen oder Fasern) unterschiedlicher Form und Größe hergestellt, wobei die Holzpartikel durch Stimmulierung eigener Adhäsionsmechanismen und Zugabe von Klebstoffen (i.d.R. eines Leimes) im sogenannten Pressenteil unter Einwirkung von Druck und Temperatur verbunden werden.

In jüngerer Zeit gewinnt die Suche nach einer möglichst ökologischen Werkstoffplatte, auch basierend auf der Beobachtung, dass weltweit der Konsum allgemein stetig ansteigt, zunehmend an Bedeutung. So ist man insbesondere bestrebt, neben den zum Nachwachsen viele Jahre benötigenden Holzwerkstoffen auch Einjahrespflanzen, insbesondere grosartige Pflanzen, zur Produktion von Werkstoffplatten zu benutzen. Diese Einjahrespflanzen haben den großen Vorteil des schnellen Wachstums. Da Einjahrespflanzen nicht verrinden, bilden ihre Ernteprodukte produktionstechnisch betrachtet zunächst einen homogenes Rohmaterial, dessen Fasern für die Werkstoffplattenproduktion durch einen Aufspleißungsprozess gewonnen werden können. So sind aus dem Stand der Technik auch ein- oder mehrschichtig aufgebautete Werkstoffplatten bekannt, deren einzelne Schichten aus Einjahrespflanzen bestehen.

Allerdings gestaltet sich die Verarbeitung von Einjahrespflanzen deutlich komplizierter als die auf Holzpartikeln basierenden Werkstoffplatten. So bildet die hohe Ausscheidung von im Herstellungsprozess abrasiv auf den Anlagenbau wirkender Silikate ein großes Hemmnis.

Zudem unterscheiden sich insbesondere auch die mechanischen Eigenschaften von aus Einjahrespflanzen hergestellten Partikeln basierenden Platten(-schichten) zu denjenigen aus auf Holzpartikeln basierenden Pendants.

Bereits diese Probleme bremsen die Entwicklung des Werkstoffplatteneinsatzes in Wachstumsmärkten stark und verlangsamen somit auch insgesamt das wirtschaftliche Wachstum in verschiedenen Märkten.

Deshalb ist es wichtig, das in nicht mehr gewollten oder nicht mehr brauchbaren, wenigstens teilweise vorgeformten (alten) Werkstoffplatten enthaltene, oft in verschiedenen Komponenten (Fasern, Späne, Langspäne,...) Basismaterial zu recyceln. Allerdings werden die Komponenten dabei meist geschwächt und eignen sich nur noch bedingt zur Herstellung qualitativ hochwertiger Werkstoffplatten. Im Falle von den oben angesprochenen Fasern sinkt die Qualität dabei bisher derart drastisch ab, dass der Gesetzgeber in vielen europäischen Ländern hohe Steuern auf die erste Vermarktung von faserhaltigen Werkstoffplatten, insbesondere MDF- und/oder HDF-Platten verhängt, da er davon ausgeht, dass diese nicht, oder maximal zu unter 5% wiederverwertet werden können. Zudem scheuen sich Betreiber von Anlagen zur Herstellung von Werkstoffplatten meist davor faserhaltige Platten, also insbesondere MDF- oder HDF-haltige Werkstoffplatten überhaupt zu recyceln, da es auf Grund des bisher ungelösten Problems des nicht sicher auszuschließenden Verbleibens von unaufgelösten Faserverklumpungen oder während des Herstellverfahrens neu entstandenen Faserverknäulungen zu erheblichen Schäden an der Anlage beziehungsweise an Anlagenteilen, beispielsweise umlaufenden Stahlbändern von Doppelbandpressen und damit zu teuren Stillständen und Produktionsausfall kommt, Zudem ist das Wiederanfahren einer Anlage mit hohen Energiekosten verbunden.

In der WO2021/112749 A1 wird ein Verfahren zum Recyceln von Lignozellulosefasern aus einer Faserplatte, die aus komprimierten Lignozellulosefasern besteht, die durch ein Bindemittel miteinander verbunden sind, offenbart. Das Verfahren umfasst die Schritte:
- Zerkleinern der Faserplatte, um Faserplattenstücke bereitzustellen;
- Dämpfen der Faserplattenstücke, um die Lignozellulosefasern durch Hydratisierung zu dekomprimieren und freizugeben sowie das Bindemittel zu hydrolysieren;
- Ablassen des Überdrucks;
- Entfernen von überschüssigem Wasserdampf, um Teile der Faserplattenstücken bereitzustellen, die freigegebene Lignozellulosefasern umfassen; und
- Trennen der Lignozellulosefasern, die freigegebene Lignozellulosefasern umfassen, um recycelte Lignozellulosefasern bereitzustellen.

Laut WO2021/112749 A1 hat das Dämpfen der einzelnen Faserplattenstücke den Vorteil, dass das Bindemittel aufquillt. Dem Dämpfen wird der Vorzug gegenüber dem Einweichen gegeben, da die US 6,648,251 offenbart, die Spanplatte vor dem Dämpfen in heißem Wasser (< 95 °C) einzuweichen. Laut WO2021/112749 A1 dient das Einweichen der Bereitstellung einer feuchten Masse, die beim anschließenden Dämpfen in einer Stopfschnecke einen Pfropfen bildet. Weiterhin dient das Einweichen dazu, das Lösen von Fasern und Partikeln aus den zu einer Spanplatte gepressten Partikeln zu erleichtern. Laut WO2021/112749 A1 führt das Einweichen der Spanplatten vor dem Dämpfen in einer Stopfschneckenzufuhr jedoch dazu, dass die freigesetzten Fasern nass sind. Sie müssen daher getrocknet werden, um ihren Einsatz in der Spanplattenproduktion zu ermöglichen. Durch das Trocknen werden die Prozesskosten erheblich erhöht. Laut WO2021/112749 A1 erkannte man, dass der Trocknungsbedarf beim Recyceln von Lignozellulosefasern aus einer Faserplatte erheblich gesenkt oder sogar ganz vermieden werden konnte, wenn im Wesentlichen trockene Faserplattenstücke gedämpft wurden, statt vorgeweichte Faserplattenstücke,

Beim Verfahren der WO2021/112749 A1 wird durch das Dämpfen das Bindemittel viskos und kann sich etwas bewegen. Allerdings bewirkt die Viskosität auch eine erhöhte Klebrigkeit. Die Faserplattenstücke können sich durch die Klebrigkeit zu Klumpen zusammenlagern. Bei der Herstellung der neuen Faserplatte können durch die Klumpen Teile der Anlage deformiert werden. Mit der Deformation kann die Qualität der Faserplatten nicht mehr sichergestellt werden. Weiterhin können Klumpen auch entstehen, wenn zu viel Bindemittel an einer Faser verbleibt. Die Klumpen können zusätzliche Schritte zum Recyceln benötigen oder den Anteil des verwendbaren Recyclingmaterials reduzieren. Weiterhin verbleibt ein Teil des Wassers vom Dämpfen in dem Bindemittel der neuen Platte und erhöht damit den Wassergehalt der neuen Faserplatte. Es entstehen dadurch bedingten Einbußen in der Festigkeit der Faserplatte. Mit der Reduktion des Anteils des Recycling-Materials auf unter 3% können die Einbußen in Grenzen gehalten werden, so dass die mit Recycling-Material hergestellte Werkstoffplatte die Spezifikation einhält.

Die Aufgabe der Erfindung ist es ein verbessertes Verfahren zur Herstellung einer, wenigstens eine Schicht aufweisenden, Werkstoffplatte, wobei wenigstens eine der wenigstens einen Schicht ein, ursprünglich aus einer Ein - oder Mehrjahrespflanze gewonnenes, Basismaterial aufweist, wobei das Basismaterial in Form wenigstens einer ersten Komponente und einer zweiten Komponente vorliegt und wenigstens eine der Komponenten wenigstens anteilig einer wenigstens in Teile vorgeformten Werkstoffplatte entnommen ist, bereitzustellen.

Die Aufgabe wird durch das erfindungsgemäße Verfahren nach Anspruch 1 gelöst. Bevorzugte oder vorteilhafte Ausführungsformen der Erfindung ergeben sich aus den Unteransprüchen, der nachfolgenden Beschreibung und/oder den beigefügten Figuren.

Die Erfindung betrifft ein Verfahren zur Herstellung einer wenigstens eine Schicht aufweisenden Werkstoffplatte. Insbesondere ist die Werkstoffplatte eine rechteckige oder trapezoide Platte.

Insbesondere ist die Werkstoffplatte aus (wenigstens) einer Schicht ausgebaut. Die wenigstens eine Schicht weist ein Basismaterial auf. Das Basismaterial der Schicht umfasst ursprünglich aus einer Ein - oder Mehrjahrespflanze gewonnenes Rohmaterial, dass in Form von Spänen, Langspänen, Wafern, Flakes, Halmabschnitten und/oder Fasern vorliegen kann. Die in den vorgenannten Formen ausgebildeten Bestandteile des Basismaterials werden Partikel genannt. Partikel können demnach Formen von Spänen, Langspänen, Wafern, Flakes, Halmabschnitten und/oder Fasern aufweisen. Liegt das Basismaterial in wenigstens einer ersten Komponente und wenigstens einer zweiten Komponente vor, können diese Komponenten sich also beispielsweise nach der Partikelform unterscheiden. Zusätzlich oder alternativ können sich die Komponenten auch durch die Materialart, beispielsweise der ihr als Ursprung dienenden speziellen Art und Sorte der betreffenden Ein- oder Mehrjahrespflanze unterscheiden. Die wenigstens eine Schicht weist neben dem in Form wenigstens einer ersten Komponente und wenigstens einer zweiten Komponente vorliegenden Basismaterial zudem fallweise und bevorzugt wenigstens ein dem Basismaterial hinzugefügtes Bindemittel auf.

In speziellen Fällen kann es auch vorkommen, dass lediglich eine Komponente (zum Beispiel die erste Komponente) durch (beispielsweise eine spezielle Ausbildung des) Basismaterial gebildet ist während eine andere Komponente, (zum Beispiel die zweite Komponente) durch ein (dem Basismaterial hinzugefügtes) Bindemittel gebildet ist. Das Bindemittel kann z.B. ein oder mehrere Harze umfassen. Insbesondere kann das Bindemittel als Leim ausgebildet sein. Das Bindemittel ist bei Raumtemperatur viskos und kann sich bewegen oder ist bei Raumtemperatur fest und kann beispielsweise in Pulver- oder Kornform gestreut werden. Das Bindemittel kann durch eine Temperatur die höher als Raumtemperatur ist, z.B. 100°C aktiviert werden. Nach der Härtung ist das Bindemittel jedenfalls nicht mehr bei Raumtemperatur (zum Beispiel 20° Celsius) viskos und behält dadurch seine Form.

Vorrangig bestehen jedoch die erste Komponente und die zweite Komponente aus Basismaterial und unterscheiden sich in wenigstens einem wesentlichen Charakteristikum aus: Art und/oder Sorte der Ein- oder Mehrjahrespflanze und/oder der Partikelform und/oder wenigstens einem weiteren im Verlauf der Beschreibung offenbarten, (zweitrangigen) Merkmal.

Bestimmte Ausbildungen von Komponenten sorgen für erhebliche Herausforderungen, wenn Bestandteile der Komponenten wenigstens anteilig einer wenigstens in Teilen vorgeformten Werkstoffplatte entnommen sind, beziehungsweise während des Verfahrens zu entnehmen sind, also (im Zuge der Durchführung des Verfahrens) recycelt werden sollen. So stellte die Wiederverwertung von in Faserform vorliegenden Komponenten(-bestandteilen) u.a. deswegen eine bislang nicht zu überwindende Herausforderung dar, weil Fasern eine starke Neigung haben sich bei Bewegung untereinander zu verknäulen und sich kaum aus den von ihnen gebildeten Knäulen wieder lösen können. Dadurch dass das vorliegende Verfahren vorsieht, dass die erste Komponente und die zweite Komponente innerhalb des ersten Abschnitts und des dritten Abschnitts gemeinschaftlich in einem Teilstrom bewegt werden, und die erste Komponente und die zweite Komponente innerhalb des zweiten Abschnitts in voneinander separaten Teilströmen bewegt werden, ist es jedoch möglich auf spezielle Herausforderungen, die einzelne Komponenten(bestandteile) für die Umsetzung eines Verfahrens zur Herstellung einer, wenigstens eine Schicht aufweisenden, Werkstoffplatte mit sich bringen speziell einzugehen, ohne durch die dazu speziell abgestimmte Behandlung die andere Komponente (bzw. deren Bestandteile) einer damit beispielsweise zwanghaft verbundenen nachteiligen Auswirkung für diese (andere) Komponente aussetzen zu müssen.

Fallweise kann es bevorzugt sein, dass die erste Komponente und die zweite Komponente sich, vor und/oder nach der Bewegung entlang separater Teilströme, in ihrer geometrischen Form voneinander unterscheiden.

Unterscheiden sich die erste und die zweite Komponente durch ihre geometrische Ausgestaltung und insbesondere nicht nur (signifikant, bspw. um wenigstens 50%) nach Größe, sondern eben insbesondere auch durch ihre geometrische Form voneinander können sie besonders gut voneinander separiert werden, um innerhalb des im Verfahrensverlauf vorgesehenen zweiten Abschnitts in voneinander separaten Teilströmen bewegt zu werden und eine separate Behandlung der beiden Komponenten innerhalb des zweiten Abschnitts zu ermöglichen.

Da besonders stabile Werkstoffplatten erzeugbar sind, wenn sie wenigstens eine Schicht aufweisen, innerhalb der wenigstens eine erste und eine zweite Komponente von Basismaterial vorgesehen sind, die sich in ihrer geometrischen Form unterscheiden kann der in der Fachwelt etablierten Auffassung, dass Werkstoffplatten, die einen Recylinganteil aufweisen stets minderwertig sind, besonders gut entgegen gewirkt werden.

Es ist sogar bevorzugt, dass wenigstens zwei der wenigstens zwei Komponenten (also wenigstens die erste Komponente und die zweite Komponente) wenigstens anteilig einer wenigstens in Teilen vorgeformten Werkstoffplatte entnommen sind und insbesondere der jeweilige Anteil oberhalb von 7 % liegt. Dabei ist dann wiederum besonders bevorzugt, dass sich diese beiden Komponenten durch ihre geometrische Form unterscheiden. Da die (beiden) Komponenten durch ihre gemeinsame Behandlung innerhalb des ersten Abschnitts ein besonders preiswertes und gegenüber der Notwendigkeit spezieller Aufbereitungsvoraussetzungen außerhalb der Durchführung des Verfahrens besonders autark sind, ist die Grundvoraussetzung zur Durchführung eines wirtschaftlichen Verfahrens zur Herstellung von Werkstoffplatten gegeben und synergetisch mit dem Vorteil der Ermöglichung der Erzeugung einer besonders stabilen und damit hochwertigen Werkstoffplatte verbunden, da die Komponenten innerhalb des zweiten Abschnitts in separaten Teilströmen im (wenigstens vornehmlich) kontinuierlichen Verfahrensfluss behandelbar sind und auf ihre speziellen Anforderungen eingegangen werden kann, insbesondere aber wirksam verhindert ist, dass Verfahrensschritte vorgesehen sind, die die Qualität einer Komponente erhöhen, dabei zwangsweise aber die Qualität einer anderen Komponente herabsetzen. Zudem ist durch eine gemeinsame Behandlung innerhalb des dritten Abschnitts eine synergetische Verbindung der Komponenten sichergestellt und eine effiziente Verfahrensdurchführung ermöglicht.

Fallweise kann es (alternativ oder ergänzend) bevorzugt sein, dass die erste Komponente und die zweite Komponente sich, vor und/oder nach der Bewegung entlang separater Teilströme, in ihrem Schüttgewicht voneinander unterscheiden.

Dadurch wird eine besonders sichere Separierung der beiden Komponenten voneinander ermöglicht und insbesondere eine Sortenreinheit von über 99,6% erzielt.

Fallweise kann es alternativ oder ergänzend auch bevorzugt sein, dass die erste Komponente und die zweite Komponente sich, vor und/oder nach der Bewegung entlang separater Teilströme, in wenigstens einer Steifigkeit, insbesondere in ihrer Dehnsteifigkeit und/oder ihrer Biegesteifigkeit und/oder ihrer Torsionssteifigkeit voneinander unterscheiden.

Auch auf diese Weise kann, wenngleich auch anlagentechnisch deutlich teurer, eine besonders sichere Separierung der beiden Komponenten voneinander ermöglicht und insbesondere eine Sortenreinheit von über 99,6% erzielt werden. Entscheidend ist aber, dass bei der zur Separierung vorgenommenen, wenigstens qualitativ differenzierten, Gruppierung von vorhandenen Steifigkeiten der Komponenten(-bestandteile) insbesondere ihrer Dehnsteifigkeit und/oder ihrer Biegesteifigkeit und/oder ihrer Torsionssteifigkeit, Informationen von großer Bedeutung für die Anlagensteuerung zur Durchführung des Verfahrens gewonnen werden, nach denen beispielsweise Bindemittelmengen, deren Temperatur, Verarbeitungstemperaturen, Befeuchtungs- oder Trocknungs und Pressparameter gewählt werden können, was die Effizienz der Anlage und des auf ihr durchgeführten Verfahrens erheblich steigert und so trotz des höheren Invests besonders wirtschaftlich sein kann.

Von großem Vorteil kann es sein, wenn die erste Komponente und die zweite Komponente sich, vor und/oder nach der Bewegung entlang separater Teilströme, in ihrer Zellstruktur voneinander unterscheiden.

Ein Unterschied in der Zellstruktur kann bereits zwischen Basismaterial holzartigen und grasartigen Ursprungs vorliegen, oder besonders ausgeprägt vorliegen, wenn die eine Zellstruktur natürlichen Ursprungs und die andere Zellstruktur künstlich gebildet ist.

Das Vorsehen von der Verarbeitung von Komponenten unterschiedlicher Zellstruktur kann dann besonders vorteilhaft sein, wenn (wenigstens) zwei Komponenten wenigstens anteilig gleiche geometrische Formen (und Größen) aufweisen.

Ergänzend oder alternativ zu den vorgenannten bevorzugten Ausführungsformen des Verfahrens kann es vorteilhaft sein, wenn die erste Komponente und die zweite Komponente sich, vor und/oder nach der Bewegung entlang separater Teilströme, in ihrem Lignin-Gehalt voneinander unterscheiden.

Dies kann insbesondere dann große Vorzüge mit sich bringen, wenn geplant ist, die erste Komponente und die zweite Komponente innerhalb des zweiten Abschnitts separat voneinander mit Bindemittel zu versehen, deren Art und Menge dann beispielsweise nach dem Ligningehalt der einzelnen Komponenten gewählt werden kann, was insbesondere der Umweltverträglichkeit des erzeugten Produkts, also der erzeugten Werkstoffplatte dient, sogar aber auch wirtschaftliche Vorteile bedeuten kann, ohne auf die Erreichung der oben beschriebenen möglichen Qualitätsmerkmale, bzw. Qualitätswerte verzichten zu müssen.

Von besonderem Vorteil ist es, wenn die zweite Komponente im zweiten Abschnitt, insbesondere zur Vermeidung von Verklumpungen, einen Vereinzelungsprozess durchläuft.

Dadurch ist es besonders gut möglich auch in Faserform vorliegende Komponenten selbst in hohen Anteilen zu verarbeiten auch wenn diese Komponente wenigstens anteilig oder sogar vollständig oder wenigstens annähernd vollständig einer wenigstens in Teile vorgeformten Werkstoffplatte entnommen ist.

Das Recycling von Fasern aus wenigstens in Teilen vorgeformten Werkstoffplatte war bisher kaum möglich und auf einen Gesamt (Gewichts-)Anteil von maximal 2% bis 4 %, jedenfalls unter 5% streng limitiert, da die Gefahr von Verknäulungen der Fasern so hoch ist, dass bei Verarbeitung von Anteilen dieser Komponenten von 5% oder gar über 5% bisher stets ein hohes Risiko bestand, massive Anlagenbeschädigungen und/oder teure Stillstände des Produktionsprozesses innerhalb kurzer Zeit, beispielsweise innerhalb nur einer einigen Arbeitsschicht (8 Stunden) hinnehmen zu müssen.

Ist ein besonderer Vereinzelungsprozess im Teilstrom einer separierten Komponente die in Faserform ausgebildet ist, beziehungsweise deren Bestandteile wenigstens teilweise vorzugsweise wenigstens im Wesentlichen in Faserform vorliegen, ist eine sichere Vereinzelung der Fasern möglich, also die Gefahr, dass ein in Größe und Struktur prozessgefährdenden Faserknäuls in die Formung und in die Pressung gerät besonders sicher ausschließbar.

Besonders bevorzugt ist dann, dass die Separierung wenigstens einen berührungslos arbeitenden Separierungsschritt beinhaltet, insbesondere eine Beaufschlagung mit Fluiddruckwellen, vorzugsweise mit in Gasform vorliegenden Druckwellen. Die Anmelderin vertreibt dazu Anlagenteile und Einzelmaschinen unter dem Namen "EcoPulser", Weiter bevorzugt weist die Separierung mehrere Separierungsschritte auf, die dann beispielsweise in einem Reinigungsturm durchgeführt werden können und beispielsweise einen, dem berührungslos arbeitenden Druckstoßverfahren vorgelagerten mechanischen Vereinzelungsprozess und/oder chemische und/oder thermische Vereinzelungsprozessschritte vorsehen können

Von großem Vorteil ist es jedenfalls, wenn neues Bindemittel wenigstens der ersten Komponente und/oder der zweiten Komponente, innerhalb des zweiten Abschnitts zugesetzt wird.

Dadurch lassen sich besonders stabile Werkstoffplatten erzeugen. Das (neue) Bindemittel kann aus Gründen von Umweltvorteilen dabei in Menge und/oder Art auf die jeweilig vorliegenden Komponente(n) oder ein Gemenge der jeweilig vorliegenden Komponenten abgestimmt sein. So kann es beispielsweise bevorzugt sein, dass die zweite Komponente durch naturbasierte Fasern gebildet und wenigstens anteilig einer recycelten ehemaligen Werkstoffplatte entnommen ist und mit einer anderen Art und/oder Menge von neuem Bindemittel benetzt wird, als die beispielsweise durch Späne gebildete erste Komponente.

Auch kann es von großem Vorteil sein, wenn eine Oberflächenstruktur wenigstens der ersten Komponente (K1) und/oder der zweiten Komponente (K2, K2), innerhalb des zweiten Abschnitts (II) beeinflusst wird.

Dadurch können nachgeordnete Prozessschritte, aber auch die Bindungsbereitschaft mit der wenigstens einen anderen Komponente und/oder wenigstens einem Bindemittel begünstigt werden. Bei der Entknäulung von Fasern können zudem wirksam Schäden bei der Betreibung der Anlage, insbesondere Schäden und teure Stillstände der Presse, beispielsweise am umlaufenden Pressband einer kontinuierlich arbeitenden Presse, wie der ContiRoll^{®} der Anmelderin, vermieden werden.

So ist es ferner bevorzugt, dass die zweite Komponente zur Herstellung von wenigstens 7 %, vorzugsweise wenigstens 12 %, weiter bevorzugt wenigstens 21 %, ganz bevorzugt wenigstens 33 % des Gewichtes der fertig erzeugten Werkstoffplatte genutzt wird.

Alternativ oder ergänzend dazu ist es bevorzugt, dass die zweite Komponente zur Herstellung von wenigstens 7 %, vorzugsweise wenigstens 12 %, weiter bevorzugt wenigstens 21 %, ganz bevorzugt wenigstens 33 % des Volumens der fertig erzeugten Werkstoffplatte genutzt wird.

Auf diese Weise können hohe Recylinganteile in einer qualitativ hervorragenden Werkstoffplatte vorgesehen sein. Wenn eine der beiden Komponenten in Faserform vorliegt können dabei in vielen Ländern hohe Steuerbeträge eingespart werden. Denn da bekannt ist, dass einmal in vorgeformten Werkstoffplatten zum Einsatz gekommene, naturbasierte Fasern, wie insbesondere Pflanzenfasern, vornehmlich also Holzfasern, nicht in (Gewichts)mengen von mehr als 4,5% oder 5% wiederverwertet werden können, sehen viele Staaten für den Verkauf von Faserhaltigen Werkstoffplatten hohe Steuersätze vor. In manchen europäischen Staaten können diese Steuersätze sogar die Produktionskosten der erstgeformten Werkstoffplatte erreichen oder übertreffen. Durch die vorliegende Erfindung, spätestens in einigen ihrer Ausführungsformen, wird es also erstmals möglich, derartige Steuerzahlungen zu verhindern und die Umwelt signifikant zu entlasten.

Weiter ist bevorzugt, dass die zweite Komponente wenigstens anteilig, vorzugsweise zu wenigstens 20%, mehr bevorzugt zu wenigstens 25%, weiter bevorzugt zu wenigstens 35%, ganz bevorzugt zu wenigstens 45% in eine, vorwiegend durch die erste Komponente gebildeten Schicht der Werkstoffplatte eingebettet wird.

Dies hat in Versuchen überraschender Weise aus der schier unendlichen Vielzahl von möglichen Ausgestaltungen einer nach dem vorliegenden Verfahren hergestellten Werkstoffplatte zu herausstechend guten Ergebnissen geführt.

Es kann von Vorteil sein, wenn ein Feuchtigkeitsgehalt der ersten Komponente und/oder der zweiten Komponente, innerhalb des zweiten Abschnitts beeinflusst wird.

Dies kann beispielsweise die Bindungsfähigkeit der zweiten Komponente erhöhen und ein stabileres Gefüge ergeben, wenn die zweite Komponente und die erste Komponente im dritten Abschnitt wieder zusammengeführt werden und insbesondere im weiteren Verlauf mit einander verpresst werden. So können besonders umweltfreundlich (wenig Bindemittelverbrauch und wenig Energieaufwand) und besonders stabile Werkstoffplatten hergestellt werden.

Sowohl zur Herstellung einschichtiger, wie auch zur Herstellung mehrschichtiger Werkstoffplatten kann es bevorzugt sein, dass die erste Komponente und/oder die zweite Komponente, vor und/oder nach der Bewegung entlang der separaten Teilströme, zur dosierbaren Beigabe in den gemeinschaftlichen Materialfluss des dritten Abschnitts gemessen wird und vorzugsweise definiert in den gemeinschaftlichen Materialfluss des dritten Abschnitts beigegeben wird.

Das vorliegende Verfahren weist in seiner allgemeinen Form und in seinen möglichen Ausgestaltungsformen eine Vielzahl von Vorteilen auf, allerdings steigt auch die Möglichkeit von unbeabsichtigten Fehlerquellen. Da die wenigstens zwei Komponenten innerhalb des zweiten Abschnitts voneinander unabhängig behandelt werden ist es nicht zwangsweise gegeben, dass ihr Verhältnis zueinander, gemessen beispielsweise in Gewichtsprozent, im dritten Abschnitt mit dem im ersten Abschnitt festgelegten oder festgestellten oder einfach vorliegenden Verhältnis übereinstimmt. So kann es sein, dass eine der Komponenten innerhalb des zweiten Abschnitts von einer größeren Menge Schmutz befreit wird, als die andere. Auch kann es sein, dass es während der Bearbeitung der einen Komponente zu einem größeren Ausschuss kommt, als im parallelen Bearbeitungsprozess der anderen Komponente, Wird jedoch zur dosierbaren Beigabe in den gemeinschaftlichen Materialfluss des dritten Abschnitts wenigstens eine der Komponenten, vorzugsweise mehrere Komponenten, ganz bevorzugt alle Komponenten gemessen und vorzugsweise definiert in den gemeinschaftlichen Materialfluss des dritten Abschnitts beigegeben kann eine hohe Qualitätssicherung und Wiederholgenauigkeit des gewünschten Herstellungsergebnis sichergestellt werden.

Von besonderem Vorzug ist es, wenn zur Durchführung des Verfahrens nach einem der vorhergehenden Ansprüche eine Anlage gemäß einem der folgenden Ansprüche zur Verfügung gestellt wird.

Dabei wird wenigstens eine der der vorliegenden Erfindung zu Grunde liegenden Aufgaben bei einer zur Herstellung einer wenigstens eine Schicht aufweisenden Werkstoffplatte, wobei wenigstens eine der wenigstens einen Schicht ein, ursprünglich aus einer Ein - oder Mehrjahrespflanze gewonnenes, Basismaterial mit wenigstens einer ersten Komponente und einer zweiten Komponente aufweist und wenigstens eine der Komponenten wenigstens anteilig einer wenigstens in Teile vorgeformten Werkstoffplatte entnommen ist, wobei die Anlage zur Ausführung entsprechender Verfahrensschritte wenigstens einen ersten Abschnitt, einen zweiten Abschnitt und einen dritten Abschnitt aufweist, wobei der Materialflusses entlang der Abschnitte ausgebildet ist, dadurch gelöst, dass der Materialfluss derart ausgebildet ist, dass die erste Komponente und die zweite Komponente innerhalb des ersten Abschnitts und des dritten Abschnitts gemeinschaftlich in einem Teilstrom bewegbar sind und die erste Komponente und die zweite Komponente innerhalb des zweiten Abschnitts in voneinander separaten Teilströmen bewegbar sind.

Die sich daraus und aus der Fortbildung der Anlage und einzelner in der Anlage enthaltener Vorrichtungen oder Anlagenteilen ergebenden Vorteile sind für den Fachmann aus der Vorteilsbeschreibung des Verfahrens herleitbar und werden aus ökonomischen Gründen hier nicht wiederholt.

Verfahren und Anlage dienen zur Herstellung einer Werkstoffplatte und wenigstens eine der der vorliegenden Erfindung zu Grunde liegenden Aufgabe wird bei einer wenigstens eine Schicht aufweisende Werkstoffplatte, wobei wenigstens eine der wenigstens einen Schicht ein, ursprünglich aus einer Ein - oder Mehrjahrespflanze gewonnenes, Basismaterial aufweist, wobei das Basismaterial in Form wenigstens einer ersten Komponente und einer zweiten Komponente vorliegt, wobei die erste Komponente und die zweite Komponente optische und/oder chemische Spuren einer gemeinschaftlichen Behandlung aufweisen, dadurch gelöst, dass wenigstens eine der Komponenten zusätzlich wenigstens eine optische und/oder chemische Spur einer separaten Behandlung aufweist.

Auch zur Betrachtung der Werkstoffplatte wird auf die durch Anwendung des Verfahrens erzielbaren Vorteile verwiesen.

Eine Werkstoffplatte, die in wenigstens einer, ihrer wenigstens einen, Schicht(en) wenigstens eine Komponente aufweist, die zusätzlich wenigstens eine optische und/oder chemische Spur einer separaten Behandlung aufweist kann auch bei hohem Recylinganteil auch von bisher als nicht oder nur in engsten Grenzen als recglingbaren Komponenten hervorragende Qualitätswerte erreichen. Eine derartige Werkstoffplatte kann also gleichzeitig in hohem Maße umweltfreundlich, preiswert, qualitativ hochwertig, verfügbar und langlebig sein.

Dazu kann es bevorzugt sein, dass ein Anteil der Werkstoffplatte, insbesondere wenigstens eine Schicht der Werkstoffplatte, ein Entstehungsprozess von wenigstens folgenden aufeinander aufbauenden Prozessschritten
a) Zerkleinerung eines zu recycelnden Basismaterialanteils, vorzugsweise gemeinsam enthaltend, eine erste Komponente und eine zweite Komponente und deren jeweilige einzelne Bestandteile,
c) Separierung der ersten Komponente von der zweiten Kompontente des, vorzugsweise zu recycelnden, Basismaterialanteils,
d) Behandlung der ersten Komponente in einem ersten Teilstrom und der zweiten Komponente in einem davon separaten zweiten Teilstrom
e) Zusammenführung der beiden Teilströme
f) gemeinsame Formung der beiden Teilströme zu einer Streugutmatte
g) Pressung der Streugutmatte zu der Werkstoffplatte, wobei den in der Werkstoffplatte enthaltenen Bestandteilen der ersten Komponente und der zweiten Komponente Spuren zuzuordnen sind und wenigstens eine Spur, insbesondere an einem Bestandteil der zweiten Komponente, der separaten Behandlung im Verfahrenssschritt d) zuzuordnen ist.

So sind Werkstoffplatten höchster Qualität auch dann herstellbar, wenn sie einen hohen Anteil der Komponente aufweist, die wenigstens anteilig, vorzugsweise vollständig oder wenigstens annähernd vollständig, einer wenigstens in Teilen, vorzugsweise fertig, vorgeformten Werkstoffplatte entnommen ist aufweist und diese Komponente beispielsweise als schwer, nur in engen Grenzen oder wenigstens nicht wirtschaftlich recycelbar eingestuft ist, und insbesondere naturbasierte Fasern, zum Beispiel lignosehaltige Fasern umfasst oder sogar (bis auf im industriellen Umfeld unvermeidliche Verschmutzungen oder Beimengungen) vollständig daraus besteht.

Dazu kann es vorteilhaft sein, wenn ein zusätzlicher Verfahrensschritt b) Trocknung wenigstens einer Komponente (K1, K2, K3)
dem spurenbildenden Entstehungsprozess zuzuordnen ist.

Eine solche Werkstoffplatte kann also einen hohen Anteil von beispielsweise wenigstens 7 %, vorzugsweise wenigstens 12 %, weiter bevorzugt wenigstens 21 %, ganz bevorzugt wenigstens 33 % des Volumens (oder des Gewichts) innerhalb wenigstens einer Schicht oder über die Betrachtung der gesamten Werkstoffplatte einer Komponente aufweisen, die einer vorgeformten Werkstoffplatte entnommen ist und in Faserform vorliegt.

Dazu kann es weiter von Vorteil sein, wenn die erste Komponente und die zweite Komponente und insbesondere deren Bestandteile, optische und/oder chemische Spuren einer gemeinschaftlichen Behandlung aufweisen, die sowohl wenigstens einem der Verfahrensschrittsschritte a) bis c) wie auch wenigstens einem der Verfahrensschritt e) bis g) zuzuordnen sind.

Um individuellen Ansprüchen gerecht werden zu können kann es zudem vorteilhaft sein, wenn die Werkstoffplatte neben der wenigstens einen (ersten) Schicht wenigstens eine zweite Schicht aufweist und dass die Gewichtsverteilung der zweiten Komponente über die beiden Schichten unterschiedlich ausgebildet ist.

Beispielsweise zur Einsparung teurer Steuern für den Hersteller von Werkstoffplatten, auf die bisher als nicht recycelbar geltenden Fasermaterialien, also Holzfasern und Einjahrespflanzenfasern, insbesondere ligninhaltige Zellstrukturen aufweisenden Fasern natürlichen Ursprungs beziehungsweise aus Pflanzenmaterial gewonnenen Faserstoffen sind hier zweite Komponenten und insbesondere deren individuell behandelten und individuelle chemische und/oder optische Spuren aufweisenden modifizierten Varianten in die Deckschicht(en), in die Kernschicht und in Deck- und Kernschichten unter Anwendung des Verfahrens einbringbar und somit unter Erhöhung wenigstens einer positiven Eigenschaft der herzustellenden beziehungsweise hergestellten Werkstoffplatte wiederverwendet.

Weitere Merkmale, Vorteile und Wirkungen der Erfindung ergeben sich aus der nachfolgenden Beschreibung bevorzugter Ausführungsbeispiele sowie der beigefügten, sieben Figuren umfassenden Zeichnung. Diese zeigt:
- Figur 1:: ein Blockdiagramm mit einer schematischen Darstellung des Verfahrens
- Figur 2:: eine schematische Darstellung eines Flussbildausschnittes einer Anlage zur Herstellung einer Werkstoffplatte
- Figur 3:: eine schematische Darstellung eines Flussbildausschnittes einer Anlage zur Herstellung einer Werkstoffplatte
- Figur 4:: eine schematische Darstellung eines Flussbildausschnittes einer Anlage zur Herstellung einer Werkstoffplatte
- Figur 5:: eine schematische Darstellung einer beispielhaften Werkstoffplatte
- Figur 6:: eine schematische Darstellung einer beispielhaften Werkstoffplatte
- Figur 7:: eine schematische Darstellung einer beispielhaften Werkstoffplatte

Die 7 Figuren der Zeichnung beziehen sich auf ein gemeinsames Ausführungsbeispiel das auch verschiedene Varianten darstellt. Gleiche Prozess-Bau oder Produktteile sind mit gleichen Bezugszeichen gekennzeichnet und müssen nicht alle in allen Figuren dargestellt und/oder bezeichnet sein.

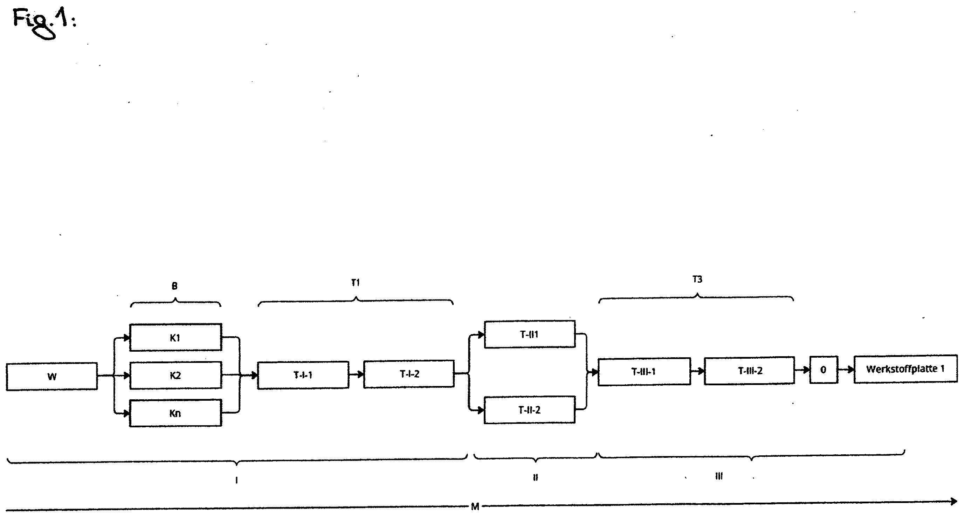

In Figur 1 ist das Verfahren anhand eines stark schematisierten Blockdiagramms dargestellt. Das Blockdiagramm zeigt dabei das Verfahren zur Herstellung einer, wenigstens eine Schicht 2, 3, 4, 5, 6 aufweisenden, Werkstoffplatte 1, wobei wenigstens eine der wenigstens einen Schicht 2, 3, 4, 5, 6 ein, ursprünglich aus einer Ein - oder Mehrjahrespflanze gewonnenes, Basismaterial B aufweist, wobei das Basismaterial B in Form wenigstens einer ersten Komponente K1 und einer zweiten Komponente K2 vorliegt und wenigstens eine der Komponenten K1, K2, bis Kn wenigstens anteilig einer, wenigstens in Teilen vorgeformten, zu recycelnden, Werkstoffplatte W entnommen ist, wobei das Verfahren einen, Teilströme T, T-I-1 bis T-III-n umfassenden, Materialfluss M entlang wenigstens eines ersten Abschnitts I, eines zweiten Abschnitts II und eines dritten Abschnittes III aufweist, wobei die erste Komponente K1 und die zweite Komponente K2, K2' innerhalb des ersten Abschnitts I und des dritten Abschnitts III gemeinschaftlich in einem Teilstrom T-I-1, T-1,2 und T-III-1, T-III-2 u.s.w. bewegt werden und das dadurch charakterisiert ist, dass die erste Komponente K1 und die zweite Komponente K2 innerhalb des zweiten Abschnitts in voneinander separaten Teilströmen T-II-1, T-II-2 bewegt werden.

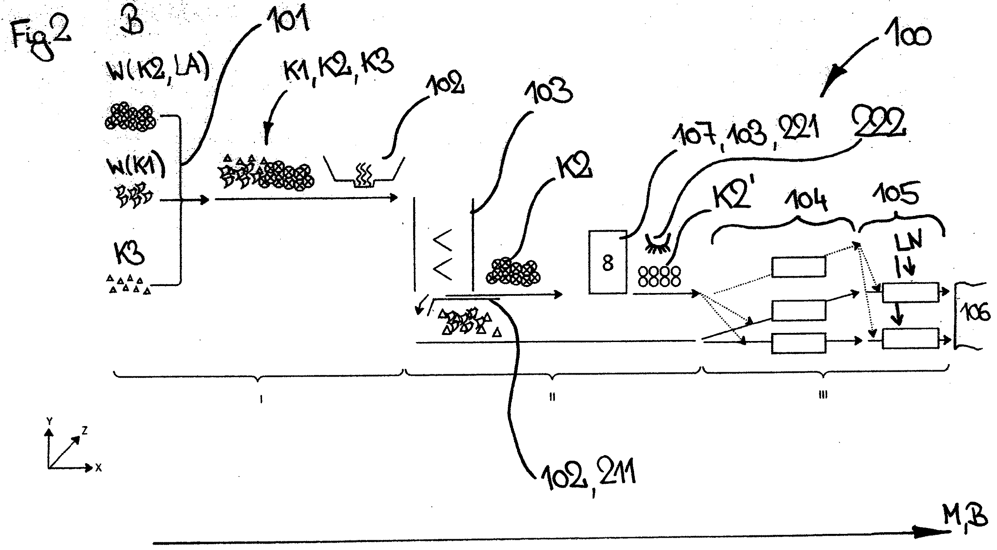

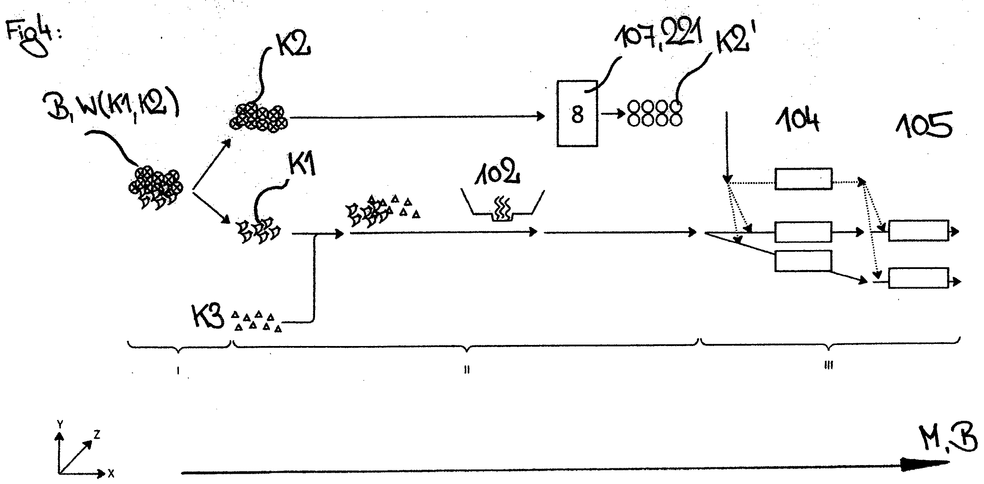

Das im Blockschema nach Figur 1 dargestellte Verfahren wird auch in den Figuren 2 bis 4 in einer sich entlang einer ersten Raumrichtung X (Längsrichtung), einer zweiten Raumrichtung Y (Breitenrichtung) und einer dritten Raumrichtung Z (Höhenrichtung) erstreckenden und ausschnittsweise abgebildeten Anlage 100 zur Herstellung von Werkstoffplatten 1 gezeigt, in der die Produktion der Werkstoffplatten im Wesentlichen entlang der Längsrichtung erfolgt und dabei in zeitlicher Folge aufeinander folgende Werkstoffplatten 1 hergestellt werden. Da die in zeitlicher Folge aufeinander folgenden Werkstoffplatten 1 sich in ihren Eigenschaften, beispielsweise abhängig von einem derzeitigen Marktbedürfnis, unterscheiden können, kann auch das durchgeführte Verfahren über einen definierten Zeitraum, beispielsweise über einen Monat, variieren. Bei dem in den Figuren 2 bis 4 dargestellten Ausschnitten einer Anlage 100 kann es sich beispielsweise um eine kontinuierlich arbeitende Anlage 100 mit einer kontinuierlich arbeitenden (nicht dargestellten) Presse, beispielsweise einer Doppelbandpresse, wie die von der Anmelderin weltweit mit großem Erfolg vermarkteten ContiRoll^{®} handeln. Aber auch zur Bestückung einer Taktpresse, beispielsweise einer zur Herstellung von Werkstoffplatten mehrere (Press-)Etagen aufweisenden Kurztaktpresse können die dargestellten Abschnitte in kontinuierlich arbeitenden Prozessen vorgesehen sein.

So unterscheiden sich die erste Komponente K1 und die zweite Komponente K2, K2' wenigstens temporär während der Durchführung des Verfahrens, vor und/oder nach der Bewegung entlang separater Teilströme T-II-1, T-II-2, in ihrer geometrischen Form voneinander

So unterscheiden sich die erste Komponente K1 und die zweite Komponente K2, K2' wenigstens temporär während der Durchführung des Verfahrens, vor und/oder nach der Bewegung entlang separater Teilströme T-II-1, T-II-2, in ihrem Schüttgewicht voneinander

So unterscheiden sich die erste Komponente K1 und die zweite Komponente K2, K2' wenigstens temporär während der Durchführung des Verfahrens, vor und/oder nach der Bewegung entlang separater Teilströme T-II-1, T-II-2, in wenigstens einer Steifigkeit, insbesondere in ihrer Dehnsteifigkeit und/oder ihrer Biegesteifigkeit und/oder ihrer Torsionssteifigkeit voneinander

So unterscheiden sich die erste Komponente K1 und die zweite Komponente K2, K2' wenigstens temporär während der Durchführung des Verfahrens, vor und/oder nach der Bewegung entlang separater Teilströme T-II-1, T-II-2, in ihrer Zellstruktur voneinander

So unterscheiden sich die erste Komponente K1 und die zweite Komponente K2, K2' wenigstens temporär während der Durchführung des Verfahrens, vor und/oder nach der Bewegung entlang separater Teilströme T-II-1, T-II-2, in ihrem Ligningehalt voneinander

In beiden dargestellten Varianten der Anlage 100 ist vorgesehen, dass die zweite Komponente K2, K2' im zweiten Abschnitt II, insbesondere zur Vermeidung von Verklumpungen, einen Vereinzelungsprozess 107, 221 durchläuft.

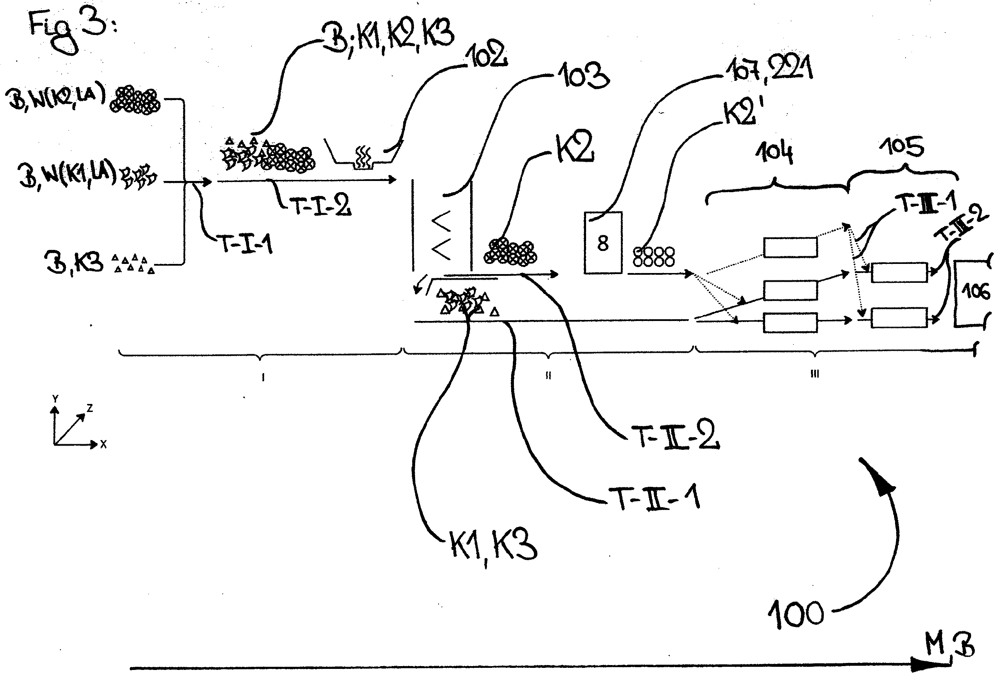

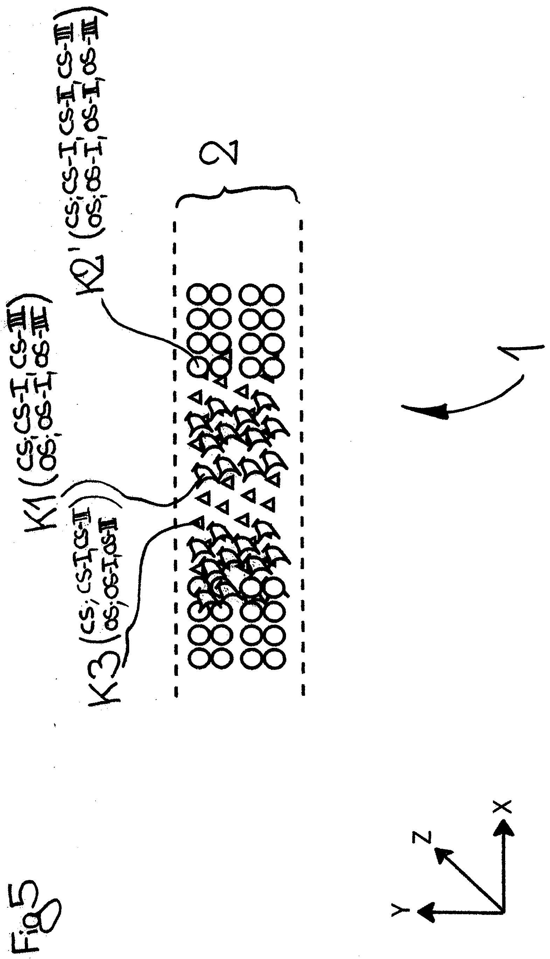

Den Figuren 2 und 3 ist zu entnehmen, dass die Komponenten K 1, K2, K3 vorzugsweise schichtweise in Abschnitt III mit neuem Bindemittel LN benetzt und anschließend der Formung der Deck- beziehungsweise Kernschicht(en) zugeführt werden um im weiteren, nicht mehr dargestellten Verlauf zu den in den Figuren 5 bis 7 in großer Vergrößerung im seitlichen Schnitt dargestellten Werkstoffplatten 1 verpresst zu werden, um anschließend vorzugsweise einem ebenfalls nicht mehr dargestellten Reifungsprozess (Kühlung / Aushärtung) zugeführt zu werden.

In Figur 2 ist zudem vorgesehen, dass alternativ (bei Abstellen der in Abschnitt III vorgesehenen Beleimung) neues Bindemittel LN wenigstens der ersten Komponente K1 und/oder der zweiten Komponente K2, innerhalb des zweiten Abschnitts II zugesetzt wird. Dabei muss es sich dann für die unterschiedlichen Komponenten, insbesondere die erste Komponente K1 und die zweite Komponente K2, nicht unbedingt um das gleiche neue Bindemittel handeln - vielmehr kann vorgesehen sein, dass sich das neue Bindemittel für die erste Komponente K1 und die zweite Komponente K2 dann nach Art, Konzentration und Menge unterscheidet.

In den Figuren 2 bis 4 ist der Materialfluss M des Basismaterials B zu erkennen, das entlang der Produktionsrichtung von Frischmaterial in Form einer Komponente K3 und zu recycelnden Material, beispielsweise zu recycelnden wenigstens in Teilen vorgeformten Werkstoffplatten, die erste und zweite Komponenten K1 und K2 gemeinsam beinhalten und/oder in Form von zu recycelnden wenigstens in Teilen vorgeformten Werkstoffplatten, die für sich jeweils nur erste Komponente K1 oder zweite Komponenten K2 beinhalten, aus einem vorgelagerten Sammlungsprozess innerhalb oder außerhalb der Anlage 100 jedoch gemeinsam dem Verfahren zugeführt werden, zunächst gemeinsam in Teilströmen T-I-1 bis T-I-n bewegt werden, um im zweiten Abschnitt II in voneinander separaten Teilströmen T-II-1 und T-II-2 bewegt zu werden, um im dritten Abschnit III wieder in gemeinsamen Teilströmen T-III-1 bis T-III-n bewegt zu werden. Die zweite Komponente K2 durchläuft im zweiten Abschnitt II, insbesondere zur Vermeidung von Verklumpungen, einen Vereinzelungsprozess, dargestellt dadurch, dass den Symbolen von K2' das die untereinander darstellenden Verknäulungen visualisierende Kreuz fehlt. Handelt es sich hier wenigstens temporär bei Durchführung des Verfahrens um einen Massenstromanteil aus Fasern, so sind diese als K2 noch in einander verhakt und verknäult und nach dem Vereinzelungs- beziehungsweise Separierungsprozess - wenigstens industrietauglich- vereinzelt und insbesondere frei von Bildungen, von für die Anlage gefährlicher, Verklumpungen und/oder Verknäulungen.

Dadurch ist es besonders gut möglich auch in Faserform vorliegende Komponenten selbst in hohen Anteilen zu verarbeiten auch wenn diese Komponente wenigstens anteilig oder sogar vollständig oder wenigstens annähernd vollständig einer wenigstens in Teile vorgeformten Werkstoffplatte entnommen ist.

Das Recyling von Fasern aus wenigstens in Teilen vorgeformten Werkstoffplatte war bisher kaum möglich und auf einen Gesamt (Gewichts-)Anteil von maximal 2% bis 4 %, jedenfalls unter 5% streng limitiert, da die Gefahr von Verknäulungen der Fasern so hoch ist, dass bei Verarbeitung von Anteilen dieser Komponenten von 5% oder gar über 5% bisher stets ein hohes Risiko bestand, massive Anlagenbeschädigungen und/oder teure Stillstände des Produktionsprozesses innerhalb kurzer Zeit, beispielsweise innerhalb nur einer einigen Arbeitsschicht (8 Stunden) hinnehmen zu müssen.

Ist ein besonderer Vereinzelungsprozess im Teilstrom einer separierten Komponente die in Faserform ausgebildet ist, beziehungsweise deren Bestandteile wenigstens teilweise vorzugsweise wenigstens im Wesentlichen in Faserform vorliegen, ist eine sichere Vereinzelung der Fasern möglich, also die Gefahr, dass ein in Größe und Struktur prozessgefährdenden Faserknäuls in die Formung und in die Pressung gerät besonders sicher ausschließbar.

Besonders bevorzugt ist dann, dass die Separierung wenigstens einen berührungslos arbeitenden Separierungsschritt beinhaltet, insbesondere eine Beaufschlagung mit Fluiddruckwellen, vorzugsweise mit in Gasform vorliegenden Druckwellen.

Dabei oder nachgelagert kann auch eine Oberflächenstruktur wenigstens der ersten Komponente K1 und/oder der zweiten Komponente K2, K2, innerhalb des zweiten Abschnitts II beeinflusst werden. Beispielsweise können die Bestandteile der Komponente K2 oder genauer K2' mit einem so genannten "Primer" zur besseren Aufnahme von Bindemitteln versehen werden und/oder mit Brandschutzmitteln "lackiert" oder getränkt werden, wobei sich die Oberflächenstruktur wenigstens einzelner Bestandteile der die Komponente K2, K2' bildenden Teilchen ändert.

Wie die Werkstoffplatten 1 der Figuren 5 bis 7 zeigen, ist es durch Anwendung des Verfahrens möglich fallweise auch Werkstoffplatten 1 herzustellen, deren zweite Komponente K2, K2' zur Herstellung von wenigstens 7 %, vorzugsweise wenigstens 12 %, weiter bevorzugt wenigstens 21 %, ganz bevorzugt wenigstens 33 % des Gewichtes der fertig erzeugten Werkstoffplatte 1 genutzt wird und/oder deren zweite Komponente K2, K2' zur Herstellung von wenigstens 7 %, vorzugsweise wenigstens 12 %, weiter bevorzugt wenigstens 21 %, ganz bevorzugt wenigstens 33 % des Volumens der fertig erzeugten Werkstoffplatte 1 genutzt wird. Dabei kann die zweite Komponente K2, K2' wenigstens anteilig, vorzugsweise zu wenigstens 20%, mehr bevorzugt zu wenigstens 25%, weiter bevorzugt zu wenigstens 35%, ganz bevorzugt zu wenigstens 45% in eine, vorwiegend durch die erste Komponente K1 gebildeten Schicht 2, 3, 4, 5, 6 der Werkstoffplatte 1 eingebettet sein.

In Figur 2 wird während der Durchführung des Verfahrens innerhalb des zweiten Abschnitts II ein Feuchtigkeitsgehalt der ersten Komponente K1 durch eine vorgesehene, individuell auf die Anforderungen der Komponente K1 abgestimmte, steuerbare Trocknung 102, 211 beeinflusst und insbesondere gesenkt, während ein Feuchtigkeitsgehalt der zweiten Komponente K2, K2' durch eine als individuelle Behandlung 222 vorgesehene separate Beleimung (Zugabe von neuem Bindemittel LN und/oder "Primerzugabe"), durch Erhöhung beeinflusst wird. Alternativ oder ergänzend kann die dargestellte Sprüheinheit auch durch wechseln der Düsen und des Zuflusses zur Beigabe von Additiven, wie Brandschutzmitteln, im Verfahren genutzt werden.

Im jeweils rechten Bildbereich der Figuren 2 bis 4 ist zu erkennen, dass die erste Komponente K1 und/oder die zweite Komponente K2, vor und/oder nach der Bewegung entlang der separaten Teilströme T-II-1 und T-II-2, zur dosierbaren Beigabe in den gemeinschaftlichen Materialfluss M des dritten Abschnitts III gemessen wird und vorzugsweise definiert in den gemeinschaftlichen Materialfluss M des dritten Abschnitts III beigegeben wird.

Zur Durchführung des, fallweise temporär über einen längeren Zeitraum variierenden, Verfahrens ist die in den Figuren 2 bis 4 dargestellte Anlage 100 in fallweise angepassten Varianten vorgesehen, was bedeutet, dass die dargestellte Anlage 100 zur Herstellung einer wenigstens eine Schicht 2, 3, 4, 5, 6 aufweisenden Werkstoffplatte 1, wobei wenigstens eine der wenigstens einen Schicht 2, 3, 4, 5, 6 ein, ursprünglich aus einer Ein - oder Mehrjahrespflanze gewonnenes, Basismaterial B mit wenigstens einer ersten Komponente K1 und einer zweiten Komponente K2 aufweist, wobei die Anlage 100 zur Ausführung entsprechender Verfahrensschritte wenigstens einen ersten Abschnitt I, einen zweiten Abschnitt II und einen dritten Abschnitt III aufweist, wobei der Materialflusses M entlang der Abschnitte I, II, III ausgebildet ist und so charakterisiert ist, dass der Materialfluss M derart ausgebildet ist, dass die erste Komponente K1 und die zweite Komponente K2 innerhalb des ersten Abschnitts I und des dritten Abschnitts III gemeinschaftlich in einem Teilstrom T1,... Tn bewegbar sind und die erste Komponente K1 und die zweite Komponente K2 innerhalb des zweiten Abschnitts II in voneinander separaten Teilströmen T-II-1, T-II-2 bewegbar sind, beispielsweise auch gemäß vorteilhafter Ausführungsvarianten des beschriebenen Verfahrens ausgestaltet sein kann.

Der Verlauf der Teilströme ist im Wesentlichen der Figur 1 zu entnehmen. Figur 3 soll aber noch einmal betonen, dass die Teilströme im dritten Abschnitt III einen gemeinsamen Verlauf haben, auch wenn Sie zur Veranschaulichung der in einer Werkstoffplatte übereinander angeordneten Schichten und deren Zulauf "übereinander" in der 2 Dimensionalen Darstellung gezeigt sind. Dennoch sind die Komponenten hier - schichtweise betrachtet - wieder vereint.

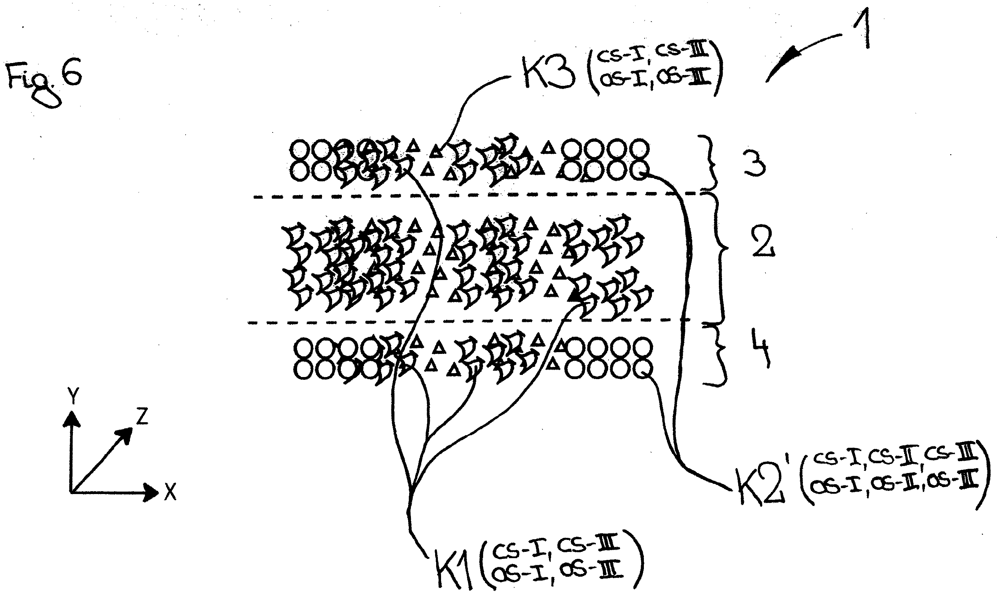

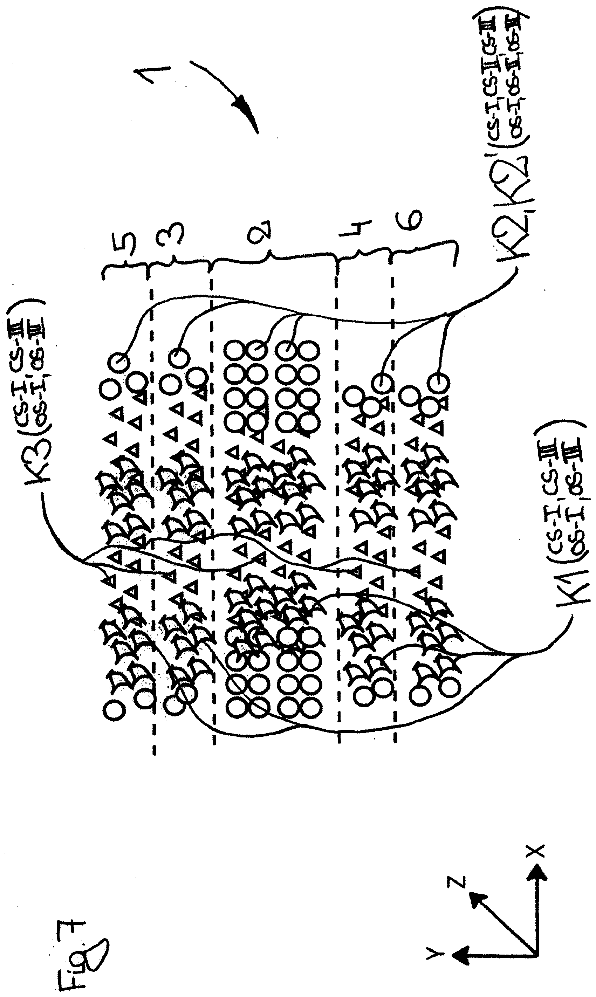

Die in den Figuren 5 bis 7 dargestellte, wenigstens eine Schicht 2, 3, 4, 5, 6 aufweisende Werkstoffplatte 1, wobei wenigstens eine der wenigstens einen Schicht 2, 3, 4, 5, 6 ein, ursprünglich aus einer Ein - oder Mehrjahrespflanze gewonnenes, Basismaterial B aufweist, wobei das Basismaterial B in Form wenigstens einer ersten Komponente K1 und einer zweiten Komponente K2 vorliegt, wobei die erste Komponente K1 und die zweite Komponente K2 optische und/oder chemische Spuren OS-I, CS-I, OS-III, CS-III einer gemeinschaftlichen Behandlung aufweisen, ist jeweils dadurch charakterisiert, dass wenigstens eine der Komponenten K1, K2, K2' zusätzlich wenigstens eine optische und/oder chemische Spur OS-II, CS-II einer separaten Behandlung aufweist. Dazu ist die in Figur 5 dargestellte Werkstoffplatte 1 einschichtig aufgebaut, während die in Figur 6 gezeigte Werkstoffplatte dreischichtig und die in Figur 7 dargestellte Werkstoffplatte 1 fünfschichtig ausgebildet ist.

Alle Drei in den Figuren 5 bis 7 dargestellten Werkstoffplatten 1 sind auch dadurch charakterisiert, dass wenigstens ein Anteil der Werkstoffplatte 1, insbesondere wenigstens eine der wenigstens einen Schicht 2, 3, 4, 5 6 der Werkstoffplatte 1 ein Entstehungsprozess von wenigstens folgenden aufeinander aufbauenden Prozessschritten
a) Zerkleinerung 101 eines, insbesondere zu recycelnden, Basismaterialanteils B (gemeinsam) enthaltend eine erste Komponente K1 und eine zweite Komponente K2 und deren jeweilige einzelne Bestandteile,
c) Separierung 103 der ersten Komponente K1 von der zweiten Kompontente K2 des (zu recycelnden) Basismaterialanteils B,
d) Behandlung 211, 212, 221, 222 der ersten Komponente K1 in einem ersten Teilstrom T-II-1 und der zweiten Komponente K2 in einem davon separaten zweiten Teilstrom T-II-2
e) Zusammenführung 104 der beiden Teilströme T-II-1, T-II-2
f) gemeinsame Formung 105 der beiden Teilströme zu einer Streugutmatte 0
g) Pressung 106 der Streugutmatte zu der Werkstoffplatte 1, wobei den in der Werkstoffplatte 1 enthaltenen Bestandteilen der ersten Komponente K1 und der zweiten Komponente K2 Spuren OS-I, CS-I, OS-III, CS-III, OS-II, CS-II zuzuordnen sind und wenigstens eine Spur OS-II, CS-II, insbesondere an einem Bestandteil der zweiten Komponente K2, der separaten Behandlung im Verfahrenssschritt d) zuzuordnen ist.

Wenigstens eine Werkstoffplatte 1, beispielsweise der Werkstoffplatte 1 nach Figur 5, kann ein zusätzlicher Verfahrensschritt b) Trocknung wenigstens einer Komponente K1, K2, K3 dem spurenbildenden Entstehungsprozess zuzuordnen sein.

Wenigstens die in den Figuren 5 und 7 dargestellte Werkstoffplatte 1 ist dabei durch Herstellung gemäß dem beschriebenen Verfahren und vorzugsweise unter Nutzung der beschriebenen Anlage 100 so ausgebildet, dass die erste Komponente und die zweite Komponente und insbesondere deren Bestandteile, optische und/oder chemische Spuren einer gemeinschaftlichen Behandlung aufweisen, die sowohl wenigstens einem der Verfahrensschrittsschritte a) und c) wie auch wenigstens einem der Verfahrensschritt e) bis g) zuzuordnen sind.

Insbesondere die in Figur 6 gezeigte Werkstoffplatte 1 zeigt im seitlichen Schnitt ein Gefüge, dass neben der wenigstens einen ersten Schicht 2 wenigstens eine zweite Schicht 3 und 4 aufweist und dass die Gewichtsverteilung der zweiten Komponente K2 über die beiden Schichten 2 und 3, beziehungsweise der Kernschicht 2 gegenüber den beiden Deckschichten 3 und 4 unterschiedlich ausgebildet ist.

Zur Einsparung teurer Steuern auf die bisher als nicht recycelbar geltenden Fasermaterialien, also Holzfasern und Einjahrespflanzenfasern, insbesondere ligninhaltige Zellstrukturen aufweisenden Fasern natürlichen Ursprungs beziehungsweise aus Pflanzenmaterial gewonnenen Faserstoffen sind hier Komponenten K2 und insbesondere deren individuell behandelten und individuelle chemische und/oder optische Spuren aufweisenden modifizierten Komponenten K2' in die Deckschicht(en) (Figur 6), in die Kernschicht (Figur 5) und in Deck- und Kernschichten (Figur 7) eingebracht und somit unter Erhöhung wenigstens einer positiven Eigenschaft der Werkstoffplatte 1 wiederverwendet.

### Bezugszeichenliste

- 0: Streugutmatte
- 1: Werkstoffplatte
- 2: Schicht (Kernschicht, erste Schicht der Werkstoffplatte)
- 3: Schicht (zweite Schicht der Werkstoffplatte)
- 4: Schicht (zweite Schicht der Werkstoffplatte)
- 5: Schicht (zweite Schicht der Werkstoffplatte)
- 6: Schicht (zweite Schicht der Werkstoffplatte)

- 100: Anlage (zur Herstellung von Werkstoffplatten)
- 101: Zerkleinerung
- 102: Trocknung
- 103: Separierung
- 104: Zusammenführung
- 105: Formung
- 106: Pressung
- 107: Vereinzelung

- 211: Behandlung (der ersten Komponente)
- 212: Behandlung (der ersten Komponente)
- 221: Behandlung (der zweiten Komponente)
- 222: Behandlung (der zweiten Komponente)

- I: erster Abschnitt
- II: zweiter Abschnitt
- III: dritter Abschnitt
- B: Basismaterial
- CS, CS-I, CS-II, CS-III: chemische Spur, chemische Spur aus einem Abschnitt
- K1: erste Komponente
- K2: zweite Komponente
- K3: dritte Komponente
- LA: altes Bindemittel, alter Leim
- LN: neues Bindemittel, neuer Leim
- M: Materialstrom
- OS, OS-I, OS-II, OS-III: optische Spur, optische Spur aus einem Abschnitt
- T, T-I-1,...,T-III-n: Teilstrom, Teilstrom in einem Abschnitt
- W: wenigstens in Teilen vorgeformte Werkstoffplatte

- X: erste Raumrichtung, Längsrichtung
- Y: zweite Raumrichtung, Breitenrichtung
- Z: dritte Raumrichtung, Höhenrichtung

## Patentansprüche

1. Verfahren zur Herstellung einer, wenigstens eine Schicht (2, 3, 4, 5, 6) aufweisenden, Werkstoffplatte (1), wobei wenigstens eine der wenigstens einen Schicht (2, 3, 4, 5, 6) ein, ursprünglich aus einer Ein - oder Mehrjahrespflanze gewonnenes, Basismaterial (B) aufweist, wobei das Basismaterial (B) in Form wenigstens einer ersten Komponente (K1) und einer zweiten Komponente (K2) vorliegt und wenigstens eine der Komponenten (K1, K2, ... Kn) wenigstens anteilig einer, wenigstens in Teilen vorgeformten Werkstoffplatte (W) entnommen ist, wobei das Verfahren einen, Teilströme (T, T-I-1,...,T-III-n) umfassenden, Materialfluss (M) entlang wenigstens eines ersten Abschnitts (I), eines zweiten Abschnitts (II) und eines dritten Abschnittes (III) aufweist, wobei die erste Komponente (K1) und die zweite Komponente (K2) innerhalb des ersten Abschnitts (I) und des dritten Abschnitts (III) gemeinschaftlich in einem Teilstrom bewegt werden,
**dadurch gekennzeichnet, dass**
die erste Komponente (K1) und die zweite Komponente (K2, K2') innerhalb des zweiten Abschnitts (II) in voneinander separaten Teilströmen (T-II-1, T-II-2) bewegt werden.

2. Verfahren nach einem der vorhergehenden Ansprüche,
**dadurch gekennzeichnet, dass**
die erste Komponente (K1) und die zweite Komponente (K2, K2') sich, vor und/oder nach der Bewegung entlang separater Teilströme (T-II-1, T-II-2), in wenigstens einer Steifigkeit, insbesondere in ihrer Dehnsteifigkeit und/oder ihrer Biegesteifigkeit und/oder ihrer Torsionssteifigkeit voneinander unterscheiden.

3. Verfahren nach einem der vorhergehenden Ansprüche,
**dadurch gekennzeichnet, dass**
die erste Komponente (K1) und die zweite Komponente (K2, K2') sich, vor und/oder nach der Bewegung entlang separater Teilströme (T-II-1, T-II-2), in ihrer Zellstruktur voneinander unterscheiden.

4. Verfahren nach einem der vorhergehenden Ansprüche,
**dadurch gekennzeichnet, dass**
die erste Komponente (K1) und die zweite Komponente (K2, K2') sich, vor und/oder nach der Bewegung entlang separater Teilströme (T-II-1, T-II-2), in ihrem Lignin-Gehalt voneinander unterscheiden.

5. Verfahren nach einem der vorhergehenden Ansprüche,
**dadurch gekennzeichnet, dass**
neues Bindemittel (LN) wenigstens der ersten Komponente (K1) und/oder der zweiten Komponente (K2), innerhalb des zweiten Abschnitts (II) zugesetzt wird.

6. Verfahren nach einem der vorhergehenden Ansprüche,
**dadurch gekennzeichnet, dass**
eine Oberflächenstruktur wenigstens der ersten Komponente (K1) und/oder der zweiten Komponente (K2, K2), innerhalb des zweiten Abschnitts (II) beeinflusst wird.

7. Verfahren nach einem der vorhergehenden Ansprüche,
**dadurch gekennzeichnet, dass**
die zweite Komponente (K2, K2') zur Herstellung von wenigstens 7 %, vorzugsweise wenigstens 12 %, weiter bevorzugt wenigstens 21 %, ganz bevorzugt wenigstens 33 % des Gewichtes der fertig erzeugten Werkstoffplatte (1) genutzt wird.

8. Verfahren nach einem der vorhergehenden Ansprüche,
**dadurch gekennzeichnet, dass**
die zweite Komponente (K2, K2') zur Herstellung von wenigstens 7 %, vorzugsweise wenigstens 12 %, weiter bevorzugt wenigstens 21 %, ganz bevorzugt wenigstens 33 % des Volumens der fertig erzeugten Werkstoffplatte (1) genutzt wird.

9. Verfahren nach einem der vorhergehenden Ansprüche,
**dadurch gekennzeichnet, dass**
die zweite Komponente (K2, K2') wenigstens anteilig, vorzugsweise zu wenigstens 20%, mehr bevorzugt zu wenigstens 25%, weiter bevorzugt zu wenigstens 35%, ganz bevorzugt zu wenigstens 45% in eine, vorwiegend durch die erste Komponente (K1) gebildeten Schicht (2, 3, 4, 5, 6) der Werkstoffplatte (1) eingebettet wird.

10. Verfahren nach einem der vorhergehenden Ansprüche,
**dadurch gekennzeichnet, dass**
ein Feuchtigkeitsgehalt der ersten Komponente (K1) und/oder der zweiten Komponente (K2, K2'), innerhalb des zweiten Abschnitts (II) beeinflusst wird.

11. Verfahren nach einem der vorhergehenden Ansprüche,
**dadurch gekennzeichnet, dass**
die erste Komponente (K1) und/oder die zweite Komponente (K2), vor und/oder nach der Bewegung entlang der separaten Teilströme, zur dosierbaren Beigabe in den gemeinschaftlichen Materialfluss (M) des dritten Abschnitts (III) gemessen wird und vorzugsweise definiert in den gemeinschaftlichen Materialfluss (M) des dritten Abschnitts (III) beigegeben wird.

12. Verfahren nach einem der vorhergehenden Ansprüche,
**dadurch gekennzeichnet, dass**
zur Durchführung des Verfahrens nach einem der vorhergehenden Ansprüche eine Anlage (100) gemäß einem der Ansprüche 21 oder 21 zur Verfügung gestellt wird.

13. Wenigstens eine Schicht (2, 3, 4, 5, 6) aufweisende Werkstoffplatte (1), wobei wenigstens eine der wenigstens einen Schicht (2, 3, 4, 5, 6) ein, ursprünglich aus einer Ein - oder Mehrjahrespflanze gewonnenes, Basismaterial (B) aufweist, wobei das Basismaterial (B) in Form wenigstens einer ersten Komponente (K1) und einer zweiten Komponente (K2) vorliegt, wobei die erste Komponente (K1) und die zweite Komponente (K2) optische und/oder chemische Spuren (OS-I, CS-I, OS-III, CS-III) einer gemeinschaftlichen Behandlung aufweisen,
**dadurch gekennzeichnet, dass**
wenigstens eine der Komponenten (K1, K2) zusätzlich wenigstens eine optische und/oder chemische Spur (OS-II, CS-II) einer separaten Behandlung aufweist.

14. Werkstoffplatte (1) gemäß dem vorhergehenden Anspruch,
**dadurch gekennzeichnet, dass**
wenigstens ein Anteil der Werkstoffplatte (1), insbesondere wenigstens eine Schicht (2, 3, 4, 5 6) der Werkstoffplatte (1) ein Entstehungsprozess von wenigstens folgenden aufeinander aufbauenden Prozessschritten
a) Zerkleinerung (101) eines zu recycelnden Basismaterialanteils (B) (gemeinsam) enthaltend eine erste Komponente (K1) und eine zweite Komponente (K2) und deren jeweilige einzelne Bestandteile,
c) Separierung (103) der ersten Komponente (K1) von der zweiten Kompontente (K2) des (zu recycelnden) Basismaterialanteils (B),
d) Behandlung (211, 212, 221, 222) der ersten Komponente (K1) in einem ersten Teilstrom (T-II-1) und der zweiten Komponente (K2) in einem davon separaten zweiten Teilstrom (T-II-2)
e) Zusammenführung (104) der beiden Teilströme (T-II-1, T-II-2)
f) gemeinsame Formung (105) der beiden Teilströme zu einer Streugutmatte (0)
g) Pressung (106) der Streugutmatte zu der Werkstoffplatte (1), wobei den in der Werkstoffplatte (1) enthaltenen Bestandteilen der ersten Komponte (K1) und der zweiten Komponente (K2) Spuren (OS-I, CS-I, OS-III, CS-III, OS-II, CS-II ) zuzuordnen sind und wenigstens eine Spur (OS-II, CS-II), insbesondere an einem Bestandteil der zweiten Komponente (K2), der separaten Behandlung im Verfahrenssschritt d) zuzuordnen ist.

15. Anlage (100) zur Herstellung einer wenigstens eine Schicht (2, 3, 4, 5, 6) aufweisenden Werkstoffplatte (1), wobei wenigstens eine der wenigstens einen Schicht (2, 3, 4, 5, 6) ein, ursprünglich aus einer Ein - oder Mehrjahrespflanze gewonnenes, Basismaterial (B) mit wenigstens einer ersten Komponente (K1) und einer zweiten Komponente (K2) aufweist, wobei die Anlage (100) zur Ausführung entsprechender Verfahrensschritte wenigstens einen ersten Abschnitt (I), einen zweiten Abschnitt (II) und einen dritten Abschnitt (III) aufweist, wobei der Materialflusses (M) entlang der Abschnitte (I, II, III) ausgebildet ist,
**dadurch gekennzeichnet, dass**
der Materialfluss (M) derart ausgebildet ist, dass die erste Komponente (K1) und die zweite Komponente (K2) innerhalb des ersten Abschnitts (I) und des dritten Abschnitts (III) gemeinschaftlich in einem Teilstrom (T1,... Tn) bewegbar sind und die erste Komponente (K1) und die zweite Komponente (K2) innerhalb des zweiten Abschnitts (II) in voneinander separaten Teilströmen (T-II-1, T-II-2) bewegbar sind.
